# EUROPÄISCHE PATENTSCHRIFT

(11) **EP 1 406 788 B1**
(45) Veröffentlichungstag und Bekanntmachung des Hinweises auf die Patenterteilung: **22.10.2008**
(21) Anmeldenummer: 01991706.1
(22) Anmeldetag: 29.12.2001
(51) Int. Cl.: B60Q 1/14

(54) **VERFAHREN ZUR AUTOMATISCHEN STEUERUNG VON BELEUCHTUNGSEINRICHTUNGEN EINES KRAFTFAHRZEUGES SOWIE VORRICHTUNG ZUR DURCHFÜHUNG DES VERFAHRENS**
METHOD FOR AUTOMATICALLY CONTROLLING LIGHTING DEVICES OF A VEHICLE AND DEVICE FOR CARRYING OUT THE METHOD
PROCEDE DE COMMANDE AUTOMATIQUE DE DISPOSITIFS D'ECLAIRAGE D'UN VEHICULE ET DISPOSITIF PERMETTANT DE METTRE EN OEUVRE LEDIT PROCEDE

(30) Priorität: 15.06.2001 DE 10128995
(43) Veröffentlichungstag der Anmeldung: 14.04.2004
(73) Patentinhaber: ROBERT BOSCH GMBH, 70442 Stuttgart (DE)
(72) Erfinder: SCHMITT, Patrick, 77839 Lichtenau (DE); HOG, Norbert, 77815 Buehl (DE); HODAPP, Bruno, 77855 Achern-Oensbach (DE); MICHENFELDER, Gebhard, 77839 Lichtenau (DE); MEIER, Hans, 77833 Ottersweier (DE); BLITZKE, Henry, 77815 Buehl (DE); SCHNEIDER, Andreas, 77815 Buehl (DE); NONNENMACHER, Pierre, F-67500 Niederschaeffolsh (FR)
(86) Internationale Anmeldenummer: PCT/DE2001/004944
(87) Internationale Veröffentlichungsnummer: WO 2003/002373

(56) Entgegenhaltungen:
- EP-A- 0 857 610
- DE-A- 19 523 262
- DE-A- 19 630 216
- DE-A- 19 957 210
- FR-A- 2 786 745
- GB-A- 2 064 238

## Beschreibung

### Stand der Technik

Die Erfindung betrifft ein Verfahren und eine Vorrichtung zur automatischen Steuerung von Beleuchtungseinrichtungen, insbesondere eines Kraftfahrzeugs, nach Gattung der unabhängigen Ansprüche.

Es sind schon zahlreiche Vorrichtungen zur automatischen Steuerung von Beleuchtungseinrichtungen von Kraftfahrzeugen, beispielsweise aus der DE 195 23 262 A1 bekannt. Diese Sensoreinrichtungen umfassen einen die allgemeinen Lichtverhältnisse in der Umgebung des Fahrzeugs ungerichtet erfassenden Globalsensor und wenigstens einen gerichtet die Lichtverhältnisse in Fahrtrichtung vor dem Fahrzeug erfassenden Richtungssensor sowie eine Steuereinrichtung, die die Beleuchtungseinrichtungen des Fahrzeugs in Abhängigkeit von den Signalen, die von den Sensoren abgegeben werden, steuert. Dabei werden die Beleuchtungseinrichtungen beispielsweise eingeschaltet, wenn der Globallichtsensor Helligkeit, der Richtungssensor jedoch Dunkelheit meldet, wie dies beispielsweise vor einer Tunneleinfahrt der Fall ist.

### Vorteile der Erfindung

Das erfindungsgemäße Verfahren mit den Merkmalen des Hauptanspruchs hat den Vorteil, dass die Beleuchtungseinrichtungen erst nach Ablauf einer Mindestzeit eingeschaltet werden, die dann beginnt, wenn die Richtungssignale eine Einschaltschwelle überschreiten und während der gesamten Mindestzeit über dieser Einschaltschwelle liegen. Durch dieses Verfahren können Brücken zuverlässig erkannt und von Tunneln unterschieden werden, wobei ein störender Blinklichteffekt der Beleuchtungseinrichtungen vermieden wird. Somit ist sichergestellt, dass die Beleuchtungseinrichtungen nicht unnötigerweise aktiviert werden und erst nach Ablauf der Ausschaltverzögerungszeit bzw. nach unterschreiten einer Ausschaltschwelle wieder deaktiviert werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Beleuchtungseinrichtungen erst eingeschaltet werden, wenn die vom Richtungssensor vermittelten Richtungssignale während der gesamten Mindestzeit monoton, insbesondere streng monoton, steigend sind. Dies ist insbesondere deshalb vorteilhaft, da auf diese Weise erkannt werden kann, ob vor Ablauf der Mindestzeit die Helligkeit wieder zunimmt, was auf das Ende der Dunkelperiode und damit der Brücke hindeutet.

Weist der Richtungssensor einen in Einbaulage in Fahrtrichtung weisenden Erfassungskegel auf, dessen Öffnungswinkel kleiner als 90° ist, ergibt sich ein besonders gutes Kontrastverhältnis, wenn das Fahrzeug sich vor einem Dunkelobjekt, wie beispielsweise einem Tunnel befindet.

Wird die Mindestzeit unter Berücksichtigung der Umgebungshelligkeit bestimmt, die durch einen Globalsensor erfasst wird, so kann diese optimal auf die Umgebungsbedingungen abgestimmt werden.

Weiterhin ist es vorteilhaft, wenn die Mindestzeit unter Berücksichtigung der Geschwindigkeit des Kraftfahrzeugs bestimmt wird, da einerseits bei höheren Geschwindigkeiten die Beleuchtungseinrichtungen früher eingeschaltet werden sollten und andererseits kurze Dunkelabschnitte, wie beispielsweise Brücken, in kürzerer Zeit durchfahren werden.

Wird die Mindestzeit in Abhängigkeit der Umgebungshelligkeit und/oder der Geschwindigkeit aus einer Tabelle im Speicher der Steuereinrichtung gelesen, so kann das erfindungsgemäße Verfahren auf einfache Weise realisiert werden.

Besonders vorteilhaft ist es, wenn die Mindestzeit in Abhängigkeit der Himmelsrichtung, in die das Kraftfahrzeug bewegt wird und/oder der Tageszeit und/oder dem Ort an dem sich das Kraftfahrzeug befindet, bestimmt wird. Auf diese Weise können fahrtrichtungsabhängige Effekte kompensiert werden, die beispielsweise dadurch entstehen, dass aufgrund des Sonnenstandes der Richtungssensor in den Abendstunden in östlicher Richtung eine wesentlich geringere Helligkeit detektiert als in westlicher Richtung und umgekehrt.

Die erfindungsgemäße Vorrichtung mit den Merkmalen des Anspruchs 8 hat den Vorteil, dass die Beleuchtungseinrichtungen mit Hilfe eines Timers, der Zeitsignale an die die Beleuchtungseinrichtung steuernde Steuereinrichtung abgibt, gesteuert werden. So können störende Blinklichteffekte, die bei der Durchfahrt von kurzen Tunneln und Brücken entstehen, vermieden werden.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Vorrichtung in schematischer Darstellung,
Figur 2 einen beispielhaften Signalverlauf des Richtungssensors bei Durchfahrt eines Tunnels und ein Beleuchtungsdiagramm hierzu,
Figur 3 einen beispielhaften Signalverlauf des Richtungssensors bei Durchfahrt einer Brücke,
Figur 4 einen beispielhaften Signalverlauf des Richtungssensors bei Durchfahrt unter einer Brücke mit Erkennungsschwelle.

### Beschreibung des Ausführungsbeispiels

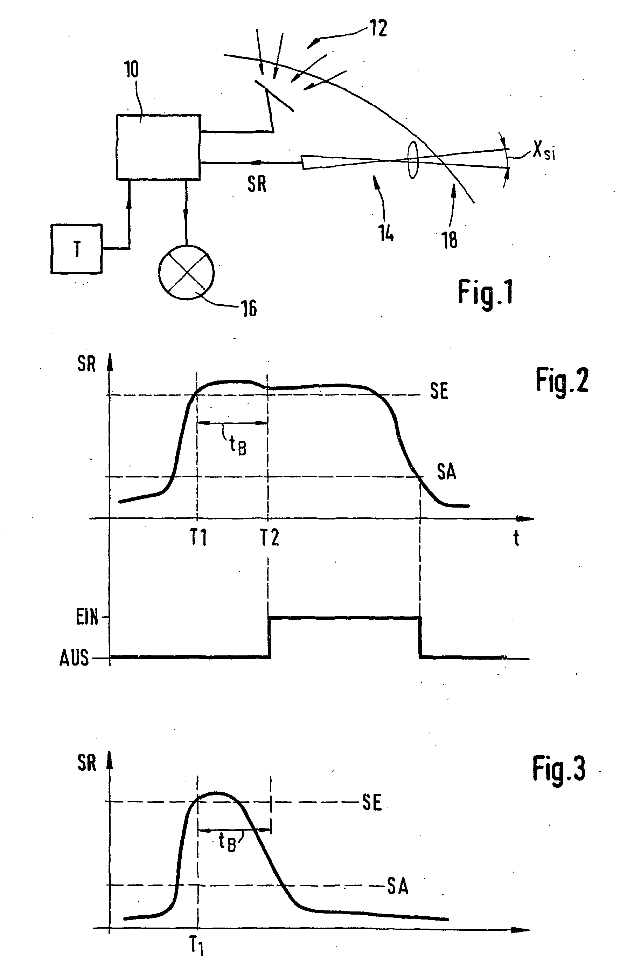

In Figur 1 ist eine erfindungsgemäße Vorrichtung schematisch dargestellt. Diese besteht im Wesentlichen aus einer Steuereinrichtung 10, einem Globalsensor 12, einem Richtungssensor 14 und einem Timer T. Die Steuereinrichtung 10 ist weiterhin mit den Beleuchtungseinrichtungen 16 verbunden, und vermag diese zu steuern. Dazu empfängt die Steuereinrichtung 10 Richtungssignale SR des Richtungssensors 14. Der Richtungssensor 14 und der Globalsensor 12 sind in einem Kraftfahrzeug beispielsweise an der Windschutzscheibe 18 angeordnet. Der Richtungssensor ist dabei etwa in Fahrtrichtung gerichtet und weist einen Öffnungskegel ψ von beispielsweise 30° auf. Der Globalsensor 12 mißt die Umgebungshelligkeit im Bereich des Kraftfahrzeugs ungerichtet.

Befindet sich das Fahrzeug vor einem Tunnel, vermittelt der Globalsensor 12 an die Steuereinrichtung 10 Signale, die - normales Tageslicht vorausgesetzt - auf eine relativ hohe Umgebungshelligkeit schließen lassen. Der Richtungssensor 14 dagegen vermittelt an die Steuereinrichtung 10 Richtungssignale SR, welche bereits auf Dunkelheit schließen lassen.

In Figur 2 ist oben ein beispielhafter Signalverlauf für einen solchen Fall dargestellt. Das Fahrzeug bewegt sich mit einer Geschwindigkeit auf einen Tunnel zu und durchfährt diesen. Im Diagramm sind die Richtungssignale SR des Richtungssensors 14 über der Zeit aufgetragen. Ein hoher Ordinatenwert lässt auf hohe Dunkelheit schließen. Weiterhin ist in Figur 2 unten ein Beleuchtungsdiagramm dargestellt, in dem die Ein- bzw. Ausschaltpunkte der Beleuchtungseinrichtungen 16 dargestellt sind.

Im Folgenden wird das erfindungsgemäße Verfahren näher erläutert.

Das Kraftfahrzeug mit der erfindungsgemäßen Vorrichtung fährt auf einen Tunnel zu. Das Richtungssignal SR des Richtungssensors 14 steigt immer weiter an, da es vor dem Fahrzeug "immer dunkler" wird. Zum Zeitpunkt T1 überschreitet das Richtungssignal SR die Einschaltschwelle SE. Nun wird für die Länge der Mindestzeit tb von der Steuereinrichtung 10 überprüft, ob die Richtungssignale SR über der Einschaltschwelle SE liegen. Ist dies der Fall, wie in Figur 2 zu sehen, so werden nach Ablauf der Mindestzeit tb die Beleuchtungseinrichtungen 16 zum Zeitpunkt t2 eingeschaltet (Figur 2, unten).

In Figur 3 ist wieder das Richtungssignal SR des Richtungssensors 14 über der Zeit aufgetragen. Im Gegensatz zu Figur 2 fährt das Fahrzeug in diesem Falle jedoch unter einer Brücke hindurch. Dadurch fällt die Helligkeit, die vom Richtungssensor 14 detektiert wird, wodurch das Richtungssignal SR zunimmt und zum Zeitpunkt T1 die Einschaltschwelle überschreitet. Wiederum wird während der Mindestzeit tb das Signal SR überwacht. In diesem Fall ist das Signal SR jedoch vor Ablauf der Mindestzeit tb unter die Einschaltschwelle SE gefallen. Dadurch werden die Beleuchtungseinrichtungen 16 nach Ablauf der Mindestzeit tb nicht eingeschaltet.

Ausgeschaltet werden die Beleuchtungseinrichtungen 16 wieder, wenn das Richtungssignal SR eine Ausschaltschwelle SA wieder unterschreitet. Natürlich ist es auch möglich, die Beleuchtungseinrichtungen 16 nicht ausschließlich in Abhängigkeit der Richtungssignale SR auszuschalten, sondern auch zusätzlich weitere Signale, beispielsweise wie die des Globalsensors 12 oder einer anderen Einrichtung vorzunehmen.

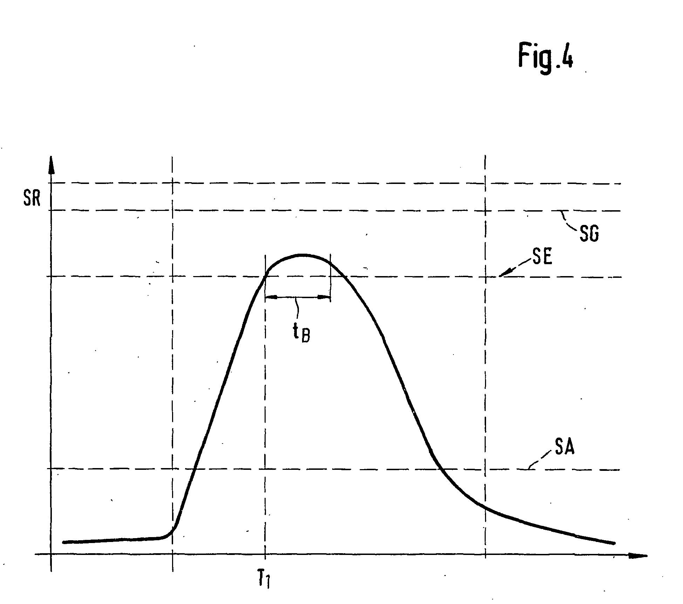

In einer Variation der Erfindung ist es möglich, dass nach Ansteigen des Richtungssignals SR und Überschreiten der Einschaltschwelle SE desselben überprüft wird, ob das Richtungssignal SR monoton steigt oder fällt. Dies ist in Figur 4 dargestellt. Nach Einfahrt des Fahrzeugs in einen Brückenbereich fällt das Richtungssignal SR ab und überschreitet die Einschaltschwelle SE. Zu diesem Zeitpunkt T1 beginnt die Mindestzeit tb, während der überprüft wird, ob das Richtungssignal SR weiter ansteigt oder - wie in Figur 4 gezeigt - innerhalb der Mindestzeit tb wieder abfällt. In diesem Fall werden die Beleuchtungseinrichtungen 16 nicht eingeschaltet, obwohl nach Ablauf der Mindestzeit tb die Richtungssignale SR immer noch über der Einschaltschwelle SE liegen.

Weiterhin ist es in einer weiteren Variation möglich, die Auswertung der Steigung nur dann vorzunehmen, wenn eine weitere Schwelle SG nicht überschritten wird. In dieser Variation überschreitet das Richtungssignal SR die Einschaltschwelle SE, worauf die Mindestzeit tb zu laufen beginnt. Überschreitet das Richtungssignal SR darüber hinaus die weitere Schwelle SG, so wird unabhängig vom Verlauf der Steigung nach Ablauf der Mindestzeit tb die Beleuchtungseinrichtungen 16 eingeschaltet, sofern die Richtungssignale SR zu diesem Zeitpunkt über der Einschaltschwelle SE oder der weiteren Schwelle SG liegen.

Die Auswertung der Steigung kann in einer einfachen Art auch dadurch stattfinden, dass die Richtungssignale SR nach Ablauf der Mindestzeit tb einen bestimmten Betrag über der Einschaltschwelle SE liegen müssen.

Die Mindestzeit tb kann selbstverständlich variabel gestaltet sein. Beispielsweise kann sie in Abhängigkeit der Signale des Globalsensors 12 festgelegt werden, so dass in der Dämmerungsphase, in der die Umgebungshelligkeit etwas niedriger ist als bei hochstehender Sonne, etwas kürzer gewählt werden. Weiters ist es auch möglich, der Steuereinrichtung 10 Signale beispielsweise eines Regensensors oder eines GPS- oder Navigationssystems zuzuführen und in Abhängigkeit des Ortes und/oder der Tageszeit und/oder der Fahrtrichtung die Mindestzeit tb zu beeinflussen. Insbesondere können der Steuereinrichtung 10 Signale, welche ein Maß für die Geschwindigkeit des Fahrzeugs sind, vermittelt werden und in Abhängigkeit dieser die Mindestzeit tb verkürzt bzw. verlängert werden.

Weiterhin ist auch die Verwendung eines Kompasses möglich, wodurch die Himmelsrichtung in die das Fahrzeug bewegt wird, bestimmt werden kann. In diesem Falle ist es beispielsweise möglich, bei einer Fahrtrichtung von Osten nach Westen in den Abendstunden bei tiefstehender Sonne im Westen, die Mindestzeit tb zu verkürzen und im umgekehrten Fall zu verlängern.

In einer weiteren Weiterbildung kann die Steuereinrichtung 10 auch Wetterinformationen, beispielsweise über einen Funkdienst oder über Internet empfangen und auswerten.

## Patentansprüche

1. Verfahren zur automatischen Steuerung von Beleuchtungseinrichtungen (16) eines Kraftfahrzeugs mittels einer Steuereinrichtung (10), wobei die Helligkeit des sich bewegenden Kraftfahrzeugs in einer spezifische Richtung durch mindestens einen Richtungssensor (14) erfaßt wird, der Richtungssignale (SR) an die Steuereinrichtung (10) abgibt, **dadurch gekennzeichnet, daß** die Steuereinrichtung (10) die Beleuchtungseinrichtungen (16) nach Ablauf einer Mindestzeit (tb) einschaltet, die beginnt, wenn die Richtungssignale (SR) eine Einschaltschwelle (SE) überschreiten und die Richtungssignale (SR) während der gesamten Mindestzeit (tb) überhalb der Einschaltschwelle (SE) liegen.

2. Verfahren nach Anspruch 1, **dadurch gekennzeichnet, daß** die Beleuchtungseinrichtungen (16) nur dann eingeschaltet werden, wenn die Richtungssignale (SR) während der gesamten Mindestzeit (tb) monoton, insbesondere streng monoton steigend sind.

3. Verfahren nach Anspruch 1 oder 2, **dadurch gekennzeichnet, daß** der Richtungssensor (14) die Helligkeit aus einem, in Einbaulage in Fahrtrichtung weisenden Erfassungskegel detektiert, dessen Öffnungswinkel (Xsi) mindestens kleiner als 90°, insbesondere kleiner als 70°, vorzugsweise kleiner als 45° ist.

4. Verfahren nach einem der vorhergehenden Ansprüche, **dadurch gekennzeichnet, daß** die Mindestzeit (tb) unter Berücksichtigung Umgebungshelligkeit, die durch mindestens einen Globalsensor (12) erfaßt wird, bestimmt wird.

5. Verfahren nach einem der vorhergehenden Ansprüche, **dadurch gekennzeichnet, daß** die Mindestzeit (tb) unter Berücksichtigung der Geschwindigkeit des Kraftfahrzeugs bestimmt wird.

6. Verfahren nach einem der Ansprüche 4 oder 5, **dadurch gekennzeichnet, daß** die Mindestzeit (tb) in Abhängigkeit der Umgebungshelligkeit bzw. der Geschwindigkeit aus einer Tabelle in einem Speicher der Steuereinrichtung (10) gelesen wird.

7. Verfahren nach einem der vorhergehenden Ansprüche, **dadurch gekennzeichnet, daß** die Mindestzeit (tb) in Abhängigkeit der Himmelsrichtung, in die das Kraftfahrzeug bewegt wird, und/oder der Tageszeit und/oder dem Ort, an dem sich das Kraftfahrzeug befindet, bestimmt wird.

8. Vorrichtung, insbesondere für ein Kraftfahrzeug, zur Durchführung des Verfahrens nach einem der vorhergehenden Ansprüche mit einem, die Helligkeit in einer spezifischen Richtung erfassenden Richtungssensor (14) und einer Steuereinrichtung (10), mit der die Beleuchtungseinrichtungen (16) des Kraftfahrzeugs steuerbar sind, **dadurch gekennzeichnet, daß** ein Timer (T) vorgesehen ist, der Zeitsignale (SZ) an die Steuereinrichtung (10) abzugeben vermag, welche die Beleuchtungseinrichtungen (16) mit Hilfe des Timers (T) steuert.

## Claims

1. Method for automatically controlling lighting devices (16) of a motor vehicle by means of a control device (10), wherein the brightness of the moving motor vehicle is sensed in a specific direction by means of at least one directional sensor (14) which outputs direction signals (SR) to the control device (10), **characterized in that** the control device (10) switches on the lighting devices (16) after a minimum time (tb) which starts when the direction signals (SR) exceed a switch-on threshold (SE) and the direction signals (SR) are above the switch-on threshold (SE) during the entire minimum time (tb) has elapsed.

2. Method according to Claim 1, **characterized in that** the lighting devices (16) are switched on only when the direction signals (SR) increase monotonously during the entire minimum time (tb), in particular increase strictly monotonously.

3. Method according to Claim 1 or 2, **characterized in that** the directional sensor (14) detects the brightness from a sensing cone which, in the installed position, points in the direction of travel and whose angle of aperture (Xsi) is at least less than 90°, in particular less than 70°, preferably less than 45°.

4. Method according to one of the preceding claims, **characterized in that** the minimum time (tb) is determined taking into account the ambient brightness which is sensed by at least one global sensor (12).

5. Method according to one of the preceding claims, **characterized in that** the minimum time (tb) is determined taking into account the velocity of the motor vehicle.

6. Method according to one of Claims 4 or 5, **characterized in that** the minimum time (tb) is read from a table in a memory of the control device (10) as a function of the ambient brightness or the velocity.

7. Method according to one of the preceding claims, **characterized in that** the minimum time (tb) is determined as a function of the point of the compass towards which the motor vehicle is moving and/or the time of day and/or the location at which the motor vehicle is located.

8. Device, in particular for a motor vehicle, for carrying out the method according to one of the preceding claims, having a directional sensor (14) which senses the brightness in a specific direction, and a control device (10) with which the lighting devices (16) of the motor vehicle can be controlled, **characterized in that** a timer (T) is provided which is capable of outputting timing signals (SZ) to the control device (10) which controls the lighting devices (16) using the timer (T).

## Revendications

1. Procédé de commande automatique d'une installation d'éclairage (16) d'un véhicule automobile à l'aide d'une installation de commande (10), selon lequel
on saisit la luminosité du véhicule qui se déplace dans une direction spécifique par au moins un capteur directionnel (14), fournissant des signaux directionnels (SR) à l'installation de commande (10),
**caractérisé en ce que**
l'installation de commande (10) branche les installation d'éclairage (16) à la fin d'une durée minimale (tb) qui débute lorsque les signaux directionnels (SR) dépassent un seuil de branchement (SE) et si les signaux directionnels (SR) dépassent le seuil de branchement (SE) pendant toute la durée minimale (tb).

2. Procédé selon la revendication 1,
**caractérisé en ce que**
les installations d'éclairage (16) ne sont branchées que si les signaux directionnels (SR) sont croissants de manière monotone pendant toute la durée minimale (tb) et notamment s'ils sont croissant d'une manière strictement monotone.

3. Procédé selon la revendication 1 ou 2,
**caractérisé en ce que**
le capteur de direction (14) détecte la luminosité dans un cône de saisie dirigé en position de montage dans la direction de déplacement et dont l'angle d'ouverture (Xsi) est au moins inférieur à 90° et notamment inférieur à 70° et de préférence inférieur à 45°.

4. Procédé selon les revendications précédentes,
**caractérisé en ce que**
la durée minimale (tb) est définie en tenant compte de la luminosité ambiante saisie par au moins un capteur global (12).

5. Procédé selon les revendications précédentes,
**caractérisé en ce que**
la durée minimale (tb) est définie en tenant compte de la vitesse du véhicule.

6. Procédé selon la revendication 4 ou 5,
**caractérisé en ce que**
la durée minimale (tb) est extraite d'un tableau inscrit dans une mémoire de l'installation de commande (10) en fonction de la luminosité ambiante ou de la vitesse.

7. Procédé selon les revendications précédentes,
**caractérisé en ce que**
la durée minimale (tb) est déterminée en fonction de la direction du ciel dans laquelle se déplace le véhicule et/ou de l'heure de la journée et/ ou du lieu où se trouve le véhicule.

8. Dispositif notamment pour un véhicule automobile, pour la mise en oeuvre du procédé selon les revendications précédentes, comportant un capteur directionnel (14) détectant la luminosité dans une direction spécifique ainsi qu'une installation de commande (10) à l'aide de laquelle se commandent les installations d'éclairage (16) du véhicule,
**caractérisé par**
une horloge (T) fournissant des signaux de temps (SZ) à l'installation de commande (10) et celle-ci commande les installations d'éclairage (16) à l'aide de l'horloge (T).
